# EUROPÄISCHE PATENTSCHRIFT

(11) **EP 2 895 380 B1**
(45) Veröffentlichungstag und Bekanntmachung des Hinweises auf die Patenterteilung: **06.04.2016**
(21) Anmeldenummer: 13727052.6
(22) Anmeldetag: 05.06.2013
(51) Int. Cl.: B62D 9/00

(54) **SICHERHEITSEINRICHTUNG AN EINEM FAHRZEUG UND ZUGEHÖRIGES FAHRZEUG**
SAFETY DEVICE ON A VEHICLE, AND ASSOCIATED VEHICLE
DISPOSITIF DE SÉCURITÉ SUR UN VÉHICULE ET VÉHICULE ASSOCIÉ

(30) Priorität: 12.09.2012 DE 102012017999
(43) Veröffentlichungstag der Anmeldung: 22.07.2015
(73) Patentinhaber: Audi AG, 85045 Ingolstadt (DE)
(72) Erfinder: MAIER, Hans-Peter, 85283 Wolnzach (DE)
(74) Vertreter: Mader, Wilfried
(86) Internationale Anmeldenummer: PCT/EP2013/001654
(87) Internationale Veröffentlichungsnummer: WO 2014/040663

(56) Entgegenhaltungen:
- DE-A1- 10 113 098

## Beschreibung

Die Erfindung betrifft eine Sicherheitseinrichtung an einem Fahrzeug gemäß dem Oberbegriff des Patentanspruchs 1 sowie ein zugehöriges Fahrzeug mit einer solchen Sicherheitseinrichtung.

Der Vorderwagen eines Fahrzeugs weist als Crashstrukturen in der Regel zwei vordere Längsträger auf, an deren freien Ende ein Querträger angeordnet ist, an welchem ein Stoßfänger befestigt ist. Bei einem Frontalaufprall erfolgt eine Umsetzung der Aufprallenergie in Verformungsarbeit. Die bekannten Crashstrukturen eines Fahrzeugs sind mit einer Überdeckung zum Unfallgegner mit 100% bzw. minimal 40% ausgelegt. Bei diesen Überdeckungen können die auftretenden Kräfte beispielsweise über den Stoßfänger und die Längsträger des beaufschlagten Fahrzeugs durch Deformation dieser Strukturen absorbiert werden. Im Fall eines Unfalls mit geringer Überdeckung, wie beispielsweise 25%, ist eine Interaktion der Längsträger ausgeschlossen. Deshalb können die auftretenden Kräfte an der Crashstruktur vorbei, über die Felge in den Fußraum des Fahrzeugs geleitet werden. Zur Reduzierung der Intrusion in den Fußraum kann das Vorderrad durch geeignete Maßnahmen in Richtung Hindernis eingedreht werden.

Aus der EP 1 748 911 B1 ist eine Abweisvorrichtung bei teilüberdeckter Frontalkollision für Kraftfahrzeuge bekannt, deren Vorderwagen einen linken und rechten Längsträger aufweist. Die Abweisvorrichtung ist vor einem Vorderrad angeordnet und schützt das Vorderrad im Kollisionsfall. Hierbei bildet die Abweisvorrichtung eine ungefähr in einer horizontalen Ebene liegende kinematische Kette, deren Koppel ein Abweiser ist, wobei die Abweisvorrichtung weiterhin einen schwenkbaren Schwingarm aufweist, welcher einerseits mit dem jeweiligen Längsträger über ein Lager und andererseits mit dem Abweiser über einen Gelenkpunkt verbunden ist, wobei der Abweiser bei Einwirkung eines frontalen Stoßes rückwärts schwenkt und sich nach der Fahrzeugaußenseite hin verlagert, so dass der Abweiser an der äußeren vertikalen Begrenzungsfläche eines Vorderrades angreift. Zudem kann an dem Abweiser ein Verbindungsmittel angreifen, welches auf die Spurstange der Lenkung des Kraftfahrzeugs einwirkt. Das Verbindungsmittel kann ein Seilzug sein, welcher die Spurstange im Sinne eines Einwärtslenkens des betroffenen Rads verschiebt.

Aus der DE 101 13 098 A1 ist eine Sicherheitseinrichtung an einem Fahrzeug zum Schutz von Fahrzeuginsassen bei einer Frontalkollision bekannt, welche Mittel zur weitgehenden Verhinderung einer Intrusion der die Fahrgastzelle nach vorn begrenzenden Stirnwand in die Fahrgastzelle durch die Vorderräder des Fahrzeugs umfasst. Diese Mittel werden aus den Vorderrädern selbst und einer mit diesen zusammenwirkenden Einrichtung gebildet, durch welche die Vorderräder aus einer Normalstellung heraus in eine davon abweichende Schutzstellung verschwenkbar sind. Bei einer Fahrzeugkollision bewirken diese Mittel ein Verschwenken der Vorderräder mit den Innenseiten in Richtung auf die Stirnwand, insbesondere zu einer schneepflugartigen Stellung zueinander. Die Einrichtung ist aus dem bei einem Aufprall in Richtung Fahrgastraum bewegten Antriebsaggregat und einem flexiblen Gurt- oder Seilzug als Zugglied für jedes Vorderrad gebildet, wobei das Zugglied einerseits am Achsschenkel des jeweiligen Vorderrads und andererseits im frontseitigen Endbereich des dem jeweiligen Vorderrad abgewandten Längsträger befestigt und auf der der Fahrgastzelle zugewandten Seite um das Antriebsaggregat geführt ist.

Die Aufgabe der Erfindung ist es, eine Sicherheitseinrichtung an einem Fahrzeug und ein korrespondierendes Fahrzeug mit einer solchen Sicherheitseinrichtung zur Verfügung zu stellen, welche eine Reduzierung der Unfallfolgen bei einem Frontalaufprall mit geringer Überdeckung ermöglichen.

Erfindungsgemäß wird diese Aufgabe durch Bereitstellung einer Sicherheitseinrichtung an einem Fahrzeug mit den Merkmalen des Patentanspruchs 1 sowie durch die Bereitstellung eines Fahrzeugs mit den Merkmalen des Patentanspruchs 11 gelöst.

Vorteilhafte Ausführungsformen und Weiterbildungen der Erfindung sind in den abhängigen Ansprüchen angegeben.

Die erfindungsgemäße Sicherheitseinrichtung an einem Fahrzeug umfasst für jedes Vorderrad ein Seilsystem mit einem Zugseil, welches an einem ersten Befestigungspunkt an einem Karosserieteil und an einem zweiten Befestigungspunkt an einem Vorderrad befestigt ist, und mindestens einer zwischen dem ersten und zweiten Befestigungspunkt angeordneten Umlenkvorrichtung. Hierbei gibt das Seilsystem in einem deaktivierten Zustand eine Lenkbewegung des in einem Radhaus angeordneten Vorderrads frei und verschwenkt während einer Kollision in einem aktivierten Zustand das betroffene Vorderrad aus einer beliebigen Ausgangsstellung in eine Schutzstellung, in welcher das Vorderrad mit seiner Außenseite in Richtung Hindernis und mit seiner Innenseite in Richtung Stirnwand eingedreht ist. Um eine Sicherheitseinrichtung an einem Fahrzeug und ein korrespondierendes Fahrzeug mit einer solchen Sicherheitseinrichtung zur Verfügung zu stellen, welche eine Reduzierung der Unfallfolgen bei einem Frontalaufprall mit geringer Überdeckung ermöglichen, umfasst das jeweilige Seilsystem erfindungsgemäß eine zwischen den Befestigungspunkten angeordnete Selbsthemmungsvorrichtung mit einer Seillose und einer Verriegelung. Hierbei gibt die Verriegelung im deaktivierten Zustand die Seillose des Zugseils und damit die Lenkbewegung des Vorderrads frei und verriegelt im aktivierten Zustand die Seillose des Zugseils, so dass bei einem Frontalaufprall das eindringende Hindernis in Abhängigkeit von der Überdeckung das Zugseil betätigt, welches das betroffene Vorderrad in die Schutzstellung verschwenkt. Durch die "Querstellung" des betroffenen Vorderrads ergibt sich in vorteilhafter Weise ein geringeres Risiko einer Intrusion des Vorderrads in den Fußraum bei einer Frontalkollision mit geringer Überdeckung.

Ausführungsformen der erfindungsgemäßen Sicherheitseinrichtung können über das Seilsystem das betroffene Rad bei einem Frontalaufprall mit geringer Überdeckung, welche beispielsweise kleiner gleich 25% ist, vom Hindernis weglenken. Dadurch wird der Fußraum zusätzlich geschützt und ein Wegleiten des Fahrzeugs vom Kollisionsgegner ermöglicht. Bei einem Frontalaufprall mit größerer Überdeckung, bei denen die Vorderräder gerade bleiben sollen, wird das Seilsystem nicht ausgelöst. Somit wird in vorteilhafter Weise das Verletzungsrisiko der Insassen bei einem Frontalaufprall mit geringer Überdeckung reduziert, ohne zusätzliche Versteifungen und/oder Ableitungsvorrichtungen im Bereich des Fußraums einzubringen, welche das Gewicht des Fahrzeugs erhöhen würden. Im deaktivierten Zustand gibt das Seilsystem die Radbewegung frei. Das bedeutet, dass Ausführungsformen der erfindungsgemäßen Sicherheitseinrichtung im Normalbetrieb die Lenkbewegungen der Vorderräder nicht beeinflussen.

In vorteilhafter Ausgestaltung der erfindungsgemäßen Sicherheitseinrichtung kann der erste Befestigungspunkt im Bereich eines äußeren vorderen Rands des Radhauses so angeordnet werden, dass sich der erste Befestigungspunkt mit dem eindringenden Hindernis in Richtung des betroffenen Vorderrads bewegt, wenn die Überdeckung des Frontalaufpralls einen vorgegebenen Schwellwert unterschreitet. Dadurch kann in vorteilhafter Weise sichergestellt werden, dass das Seilsystem nur aktiviert wird, wenn eine Frontalkollision mit geringer Überdeckung vorliegt.

In weiterer vorteilhafter Ausgestaltung der erfindungsgemäßen Sicherheitseinrichtung kann eine erste Umlenkvorrichtung im Wesentlichen auf Höhe des ersten Befestigungspunktes des Zugseils einen ersten Umlenkpunkt an einer Längsstruktur für das Zugseil ausbilden. Vorzugsweise kann die erste Umlenkvorrichtung so an der Längsstruktur angeordnet werden, dass sich der erste Umlenkpunkt mit dem eindringenden Hindernis in Fahrzeuglängsrichtung bewegt, wenn die Überdeckung des Frontalaufpralls einen vorgegebenen Schwellwert überschreitet, so dass das Zugseil nicht betätigt ist und das korrespondierende Vorderrad in der Ausgangsstellung verbleibt.

In weiterer vorteilhafter Ausgestaltung der erfindungsgemäßen Sicherheitseinrichtung kann eine zweite Umlenkvorrichtung im Wesentlichen auf Höhe des zweiten Befestigungspunktes des Zugseils einen zweiten Umlenkpunkt an der Längsstruktur für das Zugseil ausbilden. Vorzugsweise ist die Selbsthemmungsvorrichtung in Fahrzeuglängsrichtung zwischen den beiden an der Längsstruktur angeordneten Umlenkpunkten angeordnet. Dadurch ist die Selbsthemmungsvorrichtung in vorteilhafter Weise auch im Crashfall vor einer Beschädigung geschützt. Zusätzlich oder alternativ kann die Selbsthemmungsvorrichtung in Fahrzeugquerrichtung zwischen dem ersten Befestigungspunkt und dem ersten Umlenkpunkt und/oder zwischen dem zweiten Befestigungspunkt und dem zweiten Umlenkpunkt angeordnet werden. Insbesondere kann die Selbsthemmungsvorrichtung mehrere Seillosen und Verriegelungen umfassen.

In weiterer vorteilhafter Ausgestaltung der erfindungsgemäßen Sicherheitseinrichtung kann die vorgegebene Schutzstellung des betroffenen Vorderrads das Fahrzeug von dem eindringenden Hindernis wegbewegen. Dadurch kann die auf den Fahrgastraum wirkende Crashenergie in vorteilhafter Weise weiter abgemildert werden, da der Aufprallwinkel und der Abstand zum eindringenden Hindernis verändert werden können, wodurch die in Richtung Fahrgastraum wirkenden Kräfte reduziert werden können.

Das Karosserieteil mit dem ersten Befestigungspunkt des Zugseils kann beispielsweise als Strukturbauteil, vorzugsweise als Querträger und/oder Stoßfängerhalter, und/oder als Fahrzeugaggregat ausgeführt werden. Das Karosserieteil sollte vorzugsweise so steif ausgeführt werden, dass es sich bei der Kollision am Hindernis verhaken und in Richtung des Vorderrads gedrückt werden kann. Der zweite Befestigungspunkt des Zugseils kann an einem Querlenker oder an einem Radhalter des Vorderrades angeordnet werden, um während der Kollision das Verschwenken des Fahrzeugrads in die Schutzstellung zu ermöglichen.

Vorteilhafte Ausführungsformen der Erfindung sind in der Zeichnung dargestellt und werden nachfolgend beschrieben.

Dabei zeigen:
- Fig. 1: eine schematische Draufsicht auf eine Seite eines Vorderwagens mit einem ersten Ausführungsbeispiel einer erfindungsgemäßen Sicherheitseinrichtung an einem Fahrzeug in einem deaktivierten Zustand, und
- Fig. 2: eine schematische Draufsicht auf das Ausführungsbeispiel der erfindungsgemäßen Sicherheitseinrichtung an einem Fahrzeug aus Fig. 1 in einem aktivierten Zustand.

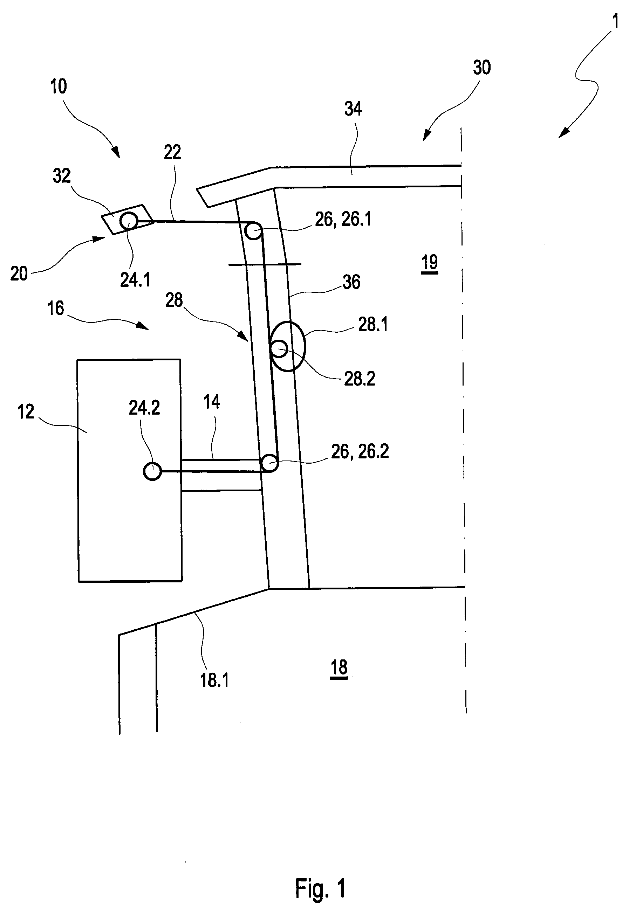

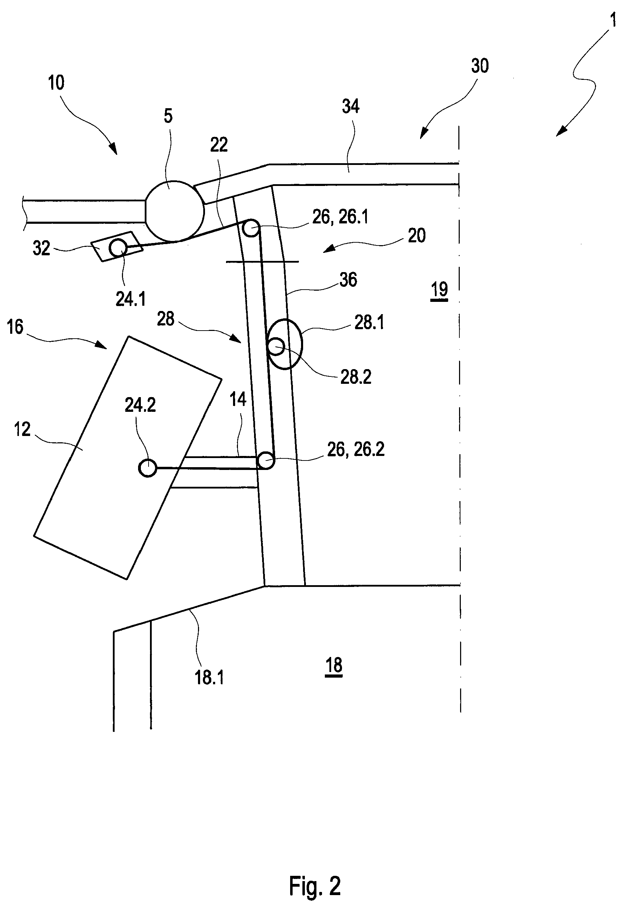

Wie aus Fig. 1 und 2 ersichtlich ist, umfasst das dargestellte Ausführungsbeispiel einer erfindungsgemäßen Sicherheitseinrichtung 10 an einem Fahrzeug 1 für jedes Vorderrad 12 ein Seilsystem 20 mit einem Zugseil 22, welches an einem ersten Befestigungspunkt 24.1 an einem Karosserieteil 32 und an einem zweiten Befestigungspunkt 24.2 an einem Vorderrad 12 befestigt. Das Vorderrad 12 ist an einem Achsschenkel 14 befestigt. Zwischen dem ersten und zweiten Befestigungspunkt 24.1, 24.2 ist mindestens eine Umlenkvorrichtung 26 angeordnet. Hierbei gibt das Seilsystem 20 in einem deaktivierten Zustand eine Lenkbewegung des in einem Radhaus 16 angeordneten Vorderrads 12 frei und verschwenkt während einer Kollision in einem aktivierten Zustand das betroffene Vorderrad 12 aus einer in Fig. 1 dargestellten beliebigen Ausgangsstellung in eine in Fig. 2 dargestellten Schutzstellung, in welcher das Vorderrad 12 mit seiner Außenseite in Richtung Hindernis 5 und mit seiner Innenseite in Richtung Stirnwand 18.1 eingedreht ist, welche einen Fußraum 18 vom Radhaus 16 trennt. Erfindungsgemäß umfasst das jeweilige Seilsystem 20 eine zwischen den Befestigungspunkten 24.1, 24.2 angeordnete Selbsthemmungsvorrichtung 28 mit einer Seillose 28.1 und einer Verriegelung 28.2, wobei die Verriegelung 28.2 im deaktivierten Zustand die Seillose 28.1 des Zugseils 22 und damit die Lenkbewegung des Vorderrads 12 freigibt und im aktivierten Zustand die Seillose 28.1 des Zugseils 22 verriegelt, so dass bei einem Frontalaufprall das eindringende Hindernis 5 in Abhängigkeit von der Überdeckung das Zugseil 22 betätigt, welches das betroffene Vorderrad 12 in die Schutzstellung verschwenkt. Die vorgegebene Schutzstellung des betroffenen Vorderrads 12 bewegt das Fahrzeug 1 in vorteilhafter Weise vom eindringenden Hindernis 5 weg.

Wie aus Fig. 1 weiter ersichtlich ist, ist der erste Befestigungspunkt 24.1 im Bereich eines äußeren vorderen Rands des Radhauses 16 so angeordnet, dass sich der erste Befestigungspunkt 24.1 mit dem eindringenden Hindernis 5 in Richtung des betroffenen Vorderrads 12 bewegt, wenn die Überdeckung des Frontalaufpralls einen vorgegebenen Schwellwert von beispielsweise 25% unterschreitet. Zudem bildet eine erste Umlenkvorrichtung 26 im Wesentlichen auf Höhe des ersten Befestigungspunktes 24.1 des Zugseils 22 einen ersten Umlenkpunkt 26.1 an einer Längsstruktur 36 für das Zugseil 22 aus. Eine zweite Umlenkvorrichtung 26 bildet im Wesentlichen auf Höhe des zweiten Befestigungspunktes 24.2 des Zugseils 22 einen zweiten Umlenkpunkt 26.2 an der Längsstruktur 36 für das Zugseil 22 aus. Im dargestellten Ausführungsbeispiel entspricht die Längsstruktur 36 einem Längsträger, an dessen freien Ende ein Querträger 34 angeordnet ist, an welchem ein Stoßfänger befestigt werden kann. Am anderen Ende des Längsträgers 36 verläuft die Stirnwand 18.1, welche den Fußraum 18 bzw. einen Fahrzeuginnenraum vom Radhaus 16 oder vom Motorraum 19 trennt.

Im dargestellten Ausführungsbeispiel ist die Selbsthemmungsvorrichtung 28 in Fahrzeuglängsrichtung zwischen den beiden an der Längsstruktur 36 angeordneten Umlenkpunkten 26.1, 26.2 angeordnet. Zusätzlich oder alternativ kann die Selbsthemmungsvorrichtung 28 in Fahrzeugquerrichtung zwischen dem ersten Befestigungspunkt 24.1 und dem ersten Umlenkpunkt 26.1 und/oder zwischen dem zweiten Befestigungspunkt 24.2 und dem zweiten Umlenkpunkt 26.2 angeordnet werden.

Wie aus Fig. 1 weiter ersichtlich ist, ist die erste Umlenkvorrichtung 26 so an der Längsstruktur 36 angeordnet, dass sich der erste Umlenkpunkt 26.1 mit dem eindringenden Hindernis 5 in Fahrzeuglängsrichtung bewegt, wenn die Überdeckung des Frontalaufpralls einen vorgegebenen Schwellwert von beispielsweise 40% überschreitet, so dass das Zugseil nicht betätigt ist und das korrespondierende Vorderrad 12 in der Ausgangsstellung verbleibt.

Wie aus Fig. 2 weiter ersichtlich ist, wird bei einem Frontalaufprall mit geringer Überdeckung, d.h. mit einer Überdeckung von 25% oder weniger, das Karosserieteil 32, an welchem der erste Befestigungspunkt 24.1 des Zugseils 22 angeordnet ist, in Richtung Vorderrad bewegt, während die Position des ersten Umlenkpunkts 26.1 und des zweiten Umlenkpunkts 26.2 unverändert bleibt. Das Zugseil 22 ist am ersten Befestigungspunkt 24.1 mit einem geeigneten Karosserieteil 32 verbunden, das sich bei der Fronkollision mit geringer Überdeckung am Hindernis 5 verhakt und in Richtung Vorderrad 12 gedrückt wird. Über die beiden Umlenkpunkte 26.1, 26.2 zieht das Zugseil 22 am zweiten Befestigungspunkt 24.2 des Zugseils 22 und lenkt das Vorderrad 12 vom Hindernis 5 weg.

Um die Lenkung im Normalbetrieb nicht zu beeinflussen, ist das Seilsystem zwischen den Befestigungspunkten 24.1, 24.2 mit der Selbsthemmungsvorrichtung 28 ausgestattet. Die Selbsthemmungsvorrichtung 28 ermöglicht bei langsamen Seilbewegungen im Fahrbetrieb durch die Seillose 28.1 das Lenken des Fahrzeugs 1. Bei sehr schnellen Seilbewegungen im Kollisionsfall mit geringer Überdeckung sperrt die Selbsthemmungsvorrichtung 28 die Seillose 28.1 über die Verriegelung 28.2 und aktiviert damit das Seilsystem 20. Bei Kollisionen mit größerer Überdeckung wird der erste Umlenkpunkt 26.1 vom Hindernis 5 in Fahrzeuglängsrichtung in Richtung Fahrzeuginnenraum 18 geschoben und entspannt dadurch das Seilsystem 20, das somit nicht aktiviert wird.

Das Karosserieteil 32 mit dem ersten Befestigungspunkt 24.1 des Zugseils 22 ist als steifes Strukturbauteil, vorzugsweise als Querträger 34 und/oder Stoßfängerhalter, und/oder als Fahrzeugaggregat, wie beispielsweise Zusatzkühler usw. ausgeführt. Das Karosserieteil 32 sollte vorzugsweise so steif ausgeführt werden, dass es sich bei der Kollision am Hindernis 5 verhaken und in Richtung des Vorderrads 12 gedrückt werden kann. Der zweite Befestigungspunkt 24.2 des Zugseils beispielsweise an einem Querlenker oder an einem Radhalter des Vorderrades 12 angeordnet.

### BEZUGSZEICHENLISTE

- 1: Fahrzeug
- 5: Hindernis
- 10: Sicherheitseinrichtung
- 12: Vorderrad
- 14: Achsschenkel
- 16: Radhaus
- 18: Fußraum
- 18.1: Stirnwand/Bodenblech
- 19: Motorraum
- 20: Seilsystem
- 22: Zugseil
- 24.1: erster Befestigungspunkt
- 24.2: zweiter Befestigungspunkt
- 26: Umlenkvorrichtung
- 26.1: erster Umlenkpunkt
- 26.2: zweiter Umlenkpunkt
- 28: Selbsthemmungsvorrichtung
- 28.1: Seillose
- 28.2: Verriegelung
- 30: Karosserie
- 32: Karosserieteil
- 34: Querträger
- 36: Längsträger

## Patentansprüche

1. Sicherheitseinrichtung an einem Fahrzeug, welche für jedes Vorderrad (12) ein Seilsystem (20) mit einem Zugseil (22), welches an einem ersten Befestigungspunkt (24.1) an einem Karosserieteil (32) und an einem zweiten Befestigungspunkt (24.2) an einem Vorderrad (12) befestigt ist, und mindestens eine zwischen dem ersten und zweiten Befestigungspunkt (24.1, 24.2) angeordnete Umlenkvorrichtung (26) umfasst, wobei das Seilsystem (20) in einem deaktivierten Zustand eine Lenkbewegung des in einem Radhaus (16) angeordneten Vorderrads (12) freigibt und während einer Kollision in einem aktivierten Zustand das betroffene Vorderrad (12) aus einer beliebigen Ausgangsstellung in eine Schutzstellung verschwenkt, in welcher das Vorderrad (12) mit seiner Außenseite in Richtung Hindernis (5) und mit seiner Innenseite in Richtung Stirnwand (18.1) eingedreht ist, **dadurch gekennzeichnet, dass** das jeweilige Seilsystem (20) eine zwischen den Befestigungspunkten (24.1, 24.2) angeordnete Selbsthemmungsvorrichtung (28) mit einer Seillose (28.1) und einer Verriegelung (28.2) umfasst, wobei die Verriegelung (28.2) im deaktivierten Zustand die Seillose (28.1) des Zugseils (22) und damit die Lenkbewegung des Vorderrads (12) freigibt und im aktivierten Zustand die Seillose (28.1) des Zugseils (22) verriegelt, so dass bei einem Frontalaufprall das eindringende Hindernis (5) in Abhängigkeit von der Überdeckung das Zugseil (22) betätigt, welches das betroffene Vorderrad (12) in die Schutzstellung verschwenkt.

2. Sicherheitseinrichtung nach Anspruch 1, **dadurch gekennzeichnet, dass** der erste Befestigungspunkt (24.1) im Bereich eines äußeren vorderen Rands des Radhauses (16) so angeordnet ist, dass sich der erste Befestigungspunkt (24.1) mit dem eindringenden Hindernis in Richtung des betroffenen Vorderrads (12) bewegt, wenn die Überdeckung des Frontalaufpralls einen vorgegebenen Schwellwert unterschreitet.

3. Sicherheitseinrichtung nach Anspruch 1 oder 2, **dadurch gekennzeichnet, dass** eine erste Umlenkvorrichtung (26) im Wesentlichen auf Höhe des ersten Befestigungspunktes (24.1) des Zugseils (22) einen ersten Umlenkpunkt (26.1) an einer Längsstruktur (36) für das Zugseil (22) ausbildet.

4. Sicherheitseinrichtung nach Anspruch 3, **dadurch gekennzeichnet, dass** die erste Umlenkvorrichtung (26) so an der Längsstruktur (36) angeordnet ist, dass sich der erste Umlenkpunkt (26.1) mit dem eindringenden Hindernis (5) in Fahrzeuglängsrichtung bewegt, wenn die Überdeckung des Frontalaufpralls einen vorgegebenen Schwellwert überschreitet, so dass das Zugseil nicht betätigt ist und das korrespondierende Vorderrad (12) in der Ausgangsstellung verbleibt.

5. Sicherheitseinrichtung nach einem der Ansprüche 1 bis 4, **dadurch gekennzeichnet, dass** eine zweite Umlenkvorrichtung (26) im Wesentlichen auf Höhe des zweiten Befestigungspunktes (24.2) des Zugseils (22) einen zweiten Umlenkpunkt (26.2) an der Längsstruktur (36) für das Zugseil (22) ausbildet.

6. Sicherheitseinrichtung nach Anspruch 5, **dadurch gekennzeichnet, dass** die Selbsthemmungsvorrichtung (28) in Fahrzeuglängsrichtung zwischen den beiden an der Längsstruktur (36) angeordneten Umlenkpunkten (26.1, 26.2) angeordnet ist.

7. Sicherheitseinrichtung nach einem der Ansprüche 3 bis 6, **dadurch gekennzeichnet, dass** die Selbsthemmungsvorrichtung (28) in Fahrzeugquerrichtung zwischen dem ersten Befestigungspunkt (24.1) und dem ersten Umlenkpunkt (26.1) und/oder zwischen dem zweiten Befestigungspunkt (24.2) und dem zweiten Umlenkpunkt (26.2) angeordnet ist.

8. Sicherheitseinrichtung nach einem der Ansprüche 1 bis 7, **dadurch gekennzeichnet, dass** die vorgegebene Schutzstellung des betroffenen Vorderrads (12) das Fahrzeug (1) von dem eindringenden Hindernis (5) wegbewegt.

9. Sicherheitseinrichtung nach einem der Ansprüche 1 bis 8, **dadurch gekennzeichnet, dass** das Karosserieteil (32) mit dem ersten Befestigungspunkt (24.1) des Zugseils (22) als Strukturbauteil, vorzugsweise als Querträger (34) und/oder Stoßfängerhalter, und/oder als Fahrzeugaggregat ausgeführt ist.

10. Sicherheitseinrichtung nach einem der Ansprüche 1 bis 9, **dadurch gekennzeichnet, dass** der zweite Befestigungspunkt (24.2) des Zugseils (22) an einem Querlenker oder an einem Radhalter des Vorderrades (12) angeordnet ist.

11. Fahrzeug mit einer Sicherheitseinrichtung, **dadurch gekennzeichnet, dass** die Sicherheitseinrichtung (10) nach einem der Ansprüche 1 bis 10 ausgeführt ist.

## Claims

1. Safety device on a motor vehicle which for each front wheel (12) comprises a cable system (20) with a tension cable (22) which is attached at a first fastening point (24.1) on a vehicle body part (32) and at a second fastening points (24.2) on a front wheel (12) and at least one deflecting device (26) arranged between the first and the second fastening point (24.1, 24.2), wherein in a deactivated state the cable system (20) enables a steering movement of the front wheel (12) arranged in a wheel housing (16) and during a collision in an activated state turns the affected front wheel (12) from any initial position into a protective position in which the front wheel (12) is turned with its outer side facing the direction of the obstacle (5) and its inner side facing in the direction of the bulkhead (18.1), **characterised in that** between the fastening points (24.1, 24.2) the cable system (20) comprises a self-retention device (28) with a cable slack (28.1) and a lock (28.2), wherein in the deactivated state the lock (28.2) releases the cable slack (28.1) of the tension cable (22) and thus enables the steering movement of the front wheel (12), and in the activated state locks the cable slack (28.1) of the tension cable (22) so that in a head-on collision, depending on the superimposition, the penetrating obstacle (5) activates the tension cable (22), which turns the affected front wheel (12) into the protective position.

2. Safety device according to claim 1 **characterised in that** the first fastening point (24.1) is arranged in the area of an outer front edge of the wheel housing (16) in such a way that the first fastening point (24.1) moves with the penetrating obstacle in the direction of the affected front wheel (12) if the superimposition of the head-on collision does not reach a predetermined threshold value.

3. Safety device according to claim 1 or 2 **characterised in that** at the level of the first fastening point (24.1) of the tension cable (22) a first deflection device (26) essentially forms a first deflection point (26.1) on a longitudinal structure (36) for the tension cable (22).

4. Safety device according to claim 3 **characterised in that** the first deflecting device (26) is arranged on the longitudinal structure (36) in such a way that the first deflection point (26.1) moves with the penetrating obstacle (5) in the longitudinal direction of the vehicle if the superimposition of the head-on collision exceeds a predetermined threshold value so that the tension cable is not activated and the corresponding front wheel (12) remains in the initial position.

5. Safety device according to any one of claims 1 to 4 **characterised in that** at the level of the second fastening point (24.2) of the tension cable (22) a second deflection device (26) essentially forms a second deflection point (26.2) on the longitudinal structure (36) for the tension cable (22).

6. Safety device according to claim 5 **characterised in that** the self-retention device (28) is arranged in the longitudinal direction of the vehicle between the two deflection points (26.1, 26.2) arranged on the longitudinal structure (36).

7. Safety device according to any one of claims 3 to 6 **characterised in that** the self-retention device (28) is arranged in the transverse direction of the vehicle between the first fastening point (24.1) and the first deflection point (26.1) and/or between the second fastening point (24.2) and the second deflection point (26.2).

8. Safety device according to any one of claims 1 to 7 **characterised in that** the predetermined protective position of the affected front wheel (12) moves the motor vehicle (1) away from the penetrating obstacle (5).

9. Safety device according to any one of claims 1 to 8 **characterised in that** the vehicle body part (32) with the first fastening point (24.1) of the tension cable (22) is designed as a structural component, preferably as a crossbeam (34) and/or as a bumper holder and/or as a motor vehicle unit.

10. Safety device according to any one of claims 1 to 9 **characterised in that** the second fastening point (24.2) of the tension cable (22) is arranged on a transverse control arm or on a wheel holder of the front wheel (12).

11. Motor vehicle with a safety device **characterised in that** the safety device (10) is designed in accordance with any one of claims 1 to 10.

## Revendications

1. Dispositif de sécurité sur un véhicule, lequel dispositif de sécurité comprend pour chaque roue avant (12) un système de câble (20) avec un câble de traction (22) qui est fixé à une partie de carrosserie (32) en un premier point de fixation (24.1) et à une roue avant (12) en un deuxième point de fixation (24.2) et au moins un dispositif de renvoi (26) qui est agencé entre le premier et le deuxième point de fixation (24.1, 24.2), le système de câble (20) libérant, dans un état désactivé, un mouvement de direction de la roue avant (12) agencée dans un passage de roue (16) et faisant pivoter, dans un état activé pendant une collision, la roue avant concernée (12) hors d'une position initiale quelconque dans une position de protection dans laquelle la roue avant (12) est tournée avec son côté extérieur en direction de l'obstacle (5) et avec son côté intérieur en direction d'une paroi frontale (18.1), **caractérisé en ce que** le système de câble respectif (20) comprend un dispositif autobloquant (28) qui est agencé entre les points de fixation (24.1, 24.2) et qui comporte un oeillet de câble (28.1) et un verrouillage (28.2), le verrouillage (28.2) libérant dans l'état désactivé l'oeillet de câble (28.1) du câble de traction (22) et donc le mouvement de direction de la roue avant (12) et verrouillant dans l'état activé l'oeillet de câble (28.1) du câble de traction (22) de telle sorte que, lors d'un choc frontal, l'obstacle entrant (5) actionne en fonction du recouvrement le câble de traction (22) qui fait pivoter la roue avant concernée (12) dans la position de protection.

2. Dispositif de sécurité selon la revendication 1, **caractérisé en ce que** le premier point de fixation (24.1) est agencé de telle sorte dans la zone d'un bord avant extérieur du passage de roue (16) que le premier point de fixation (24.1) se déplace avec l'obstacle entrant en direction de la roue avant concernée (12) lorsque le recouvrement du choc frontal est inférieur à une valeur de seuil prédéterminée.

3. Dispositif de sécurité selon la revendication 1 ou 2, **caractérisé en ce qu'**un premier dispositif de renvoi (26) forme globalement à la hauteur du premier point de fixation (24.1) du câble de traction (22) un premier point de renvoi (26.1) sur une structure longitudinale (36) pour le câble de traction (22).

4. Dispositif de sécurité selon la revendication 3, **caractérisé en ce que** le premier dispositif de renvoi (26) est agencé de telle sorte sur la structure longitudinale (36) que le premier point de renvoi (26.1) se déplace avec l'obstacle entrant (5) dans le sens de la longueur du véhicule lorsque le recouvrement du choc frontal est supérieur à une valeur de seuil prédéterminée de telle sorte que le câble de traction n'est pas actionné et que la roue avant correspondante (12) reste dans la position initiale.

5. Dispositif de sécurité selon l'une des revendications 1 à 4, **caractérisé en ce qu'**un deuxième dispositif de renvoi (26) forme globalement à la hauteur du deuxième point de fixation (24.2) du câble de traction (22) un deuxième point de renvoi (26.2) sur la structure longitudinale (36) pour le câble de traction (22).

6. Dispositif de sécurité selon la revendication 5, **caractérisé en ce que** le dispositif autobloquant (28) est agencé dans le sens de la longueur du véhicule entre les deux points de renvoi (26.1, 26.2) agencés sur la structure longitudinale (36).

7. Dispositif de sécurité selon l'une des revendications 3 à 6, **caractérisé en ce que** le dispositif autobloquant (28) est agencé dans le sens transversal du véhicule entre le premier point de fixation (24.1) et le premier point de renvoi (26.1) et/ou entre le deuxième point de fixation (24.2) et le deuxième point de renvoi (26.2).

8. Dispositif de sécurité selon l'une des revendications 1 à 7, **caractérisé en ce que** la position de protection prédéterminée de la roue avant concernée (12) éloigne le véhicule (1) de l'obstacle entrant (5).

9. Dispositif de sécurité selon l'une des revendications 1 à 8, **caractérisé en ce que** la partie de carrosserie (32) avec le premier point de fixation (24.1) du câble de traction (22) est réalisée comme une pièce de structure, de préférence comme une traverse (34) et/ou un support de pare-chocs, et/ou comme un élément de véhicule.

10. Dispositif de sécurité selon l'une des revendications 1 à 9, **caractérisé en ce que** le deuxième point de fixation (24.2) du câble de traction (22) est agencé sur un bras de suspension ou un support de roue de la roue avant (12).

11. Véhicule avec un dispositif de sécurité, **caractérisé en ce que** le dispositif de sécurité (10) est réalisé selon l'une des revendications 1 à 10.
